# EUROPÄISCHE PATENTANMELDUNG

(11) **EP 1 584 465 A1**
(43) Veröffentlichungstag der Anmeldung: **12.10.2005**
(21) Anmeldenummer: 05002347.2
(22) Anmeldetag: 04.02.2005
(51) Int. Cl.: B32B 27/26, A61F 5/14, A43B 13/38, A43B 17/00

(54) **Verbundplatte für die Orthopädietechnik, Verfahren zu deren Herstellung und deren Verwendung**

(30) Priorität: 23.03.2004 DE 102004014609
(71) Anmelder: Carl Freudenberg KG, 69469 Weinheim (DE)
(72) Erfinder: Graab, Gerhard, 68199 Mannheim (DE); Noe, Manfred, 69514 Laudenbach (DE); Schmitt, Jürgen, 64653 Lorsch (DE)

(57) **Zusammenfassung**

Beschrieben wird eine Verbundplatte umfassend mindestens zwei direkt aneinandergrenzende Schichten oder Abschnitten Füllstoff enthaltender geschäumter Kunststoffe, die jeweils aus thermoplastischem vernetztem und geschlossenzellig geschäumtem Material bestehen, wenigstens unterschiedliche Härte und/oder Farbe und/oder Raumgewicht aufweisen und die ohne Einsatz eines Klebmittels miteinander verbunden sind.

Die Herstellung erfolgt durch Schäumen und Vernetzen von Kunststoffschichten in einer Presse. Die Verbundplatte läßt sich in der Orthopädietechnik einsetzen.

## Beschreibung

Die vorliegende Erfindung betrifft eine Verbundplatte aus geschäumten Kunststoffen mit gezielt eingestellter Härte sowie deren Herstellung und Verwendung. Die Verbundplatte läßt sich insbesondere als Einlage in der Orthopädietechnik einsetzen.

Zur Anwendung in der Orthopädietechnik werden heute getriebene Sohlenplatten, bevorzugt aus Ethylen-Vinylacetat-Copolymeren in verschiedener Dicke, unterschiedlichem Raumgewicht, Härte oder Farbe mit Hilfe von Klebern oder Klebefolien aufeinander kaschiert und in dieser Form weiterverwendet z. B. zur Herstellung von orthopädischen Einlagen.

Bei dieser Herstellungsweise besteht die Gefahr, daß sich die Klebung bei den weiteren notwendigen Verarbeitungs- und Verformungsschritten unter dem Einfluß der notwendigen Temperatur und der mechanischen Beanspruchung bei der Verformung wieder löst. Außerdem ist dieses Verfahren unwirtschaftlich, da ein großer Aufwand zur Kaschierung der Ausgangsmaterialien zu einem Kombinationsprodukt notwendig ist.

Verbundplatten für die Orthopädietechnik sind in der DE-A-36 39 505, der US-A-6,560,902, der WO-A-96/12,420 und der DE-U-200 12 844 offenbart.

In der DE-A-31 14 105 wird ein Verfahren zur Herstellung einer reliefartigprofilierten Laufsohle aus einem geschlossenzellig geschäumten vernetzten Ethylen-Co-vinylacetat beschrieben sowie eine damit hergestellte Laufsohle für Schuhe.

In der EP-A-329490 wird ein Verfahren zur Herstellung eines vernetzten Polyolefinschaums beschrieben, mit dem vernetzte Polyolefinschäume in Form einer mehrschichtigen Struktur bereitgestellt werden, die glatte Oberflächen aufweisen und die sich gut verformen lassen. Dabei wird eine erste aus Polyolefin-Thermoplast bestehende Schicht, enthaltend ein Treibmittel und ein chemisches Vernetzungsmittel mit einer zweiten Schicht aus Polyolefin-Thermoplast kombiniert, die ihrerseits lediglich ein Treibmittel enthält. Durch nachfolgende Bestrahlung mit Elektronenstrahlen wird die zweite Schicht vernetzt und anschließend durch Wärmebehandlung sowohl das chemische Vernetzungsmittel in der ersten Schicht als auch das Treibmittel in beiden Schichten zersetzt, so dass eine Schaumstruktur mit weicher Oberfläche entsteht. Die Verwendung der Elektronenstrahlvernetzung ist abhängig von der Energie der Elektronenstrahlen auf gewisse Schichtdicken begrenzt. Aufgrund der Wechselwirkung der Elektronenstrahlen mit dem Polymer ist der Grad der Vernetzung abhängig von der Dicke des zu bestrahlenden Materials mit einem Gradienten versehen. Diese schränkt neben der Tatsache, dass eine Elektronenstrahlvernetzungsanlage hohe Investitionen zur Folge hat, die Verwendung der Elektronenstrahlvernetzung ein.

Ausgehend von diesem Stand der Technik ist es Aufgabe der vorliegenden Erfindung, eine Verbundplatte aus geschäumten Kunststoffen unterschiedlicher Härte bereitzustellen, die sich unter Hitzeeinwirkung verformen läßt, ohne daß sie sich bei der Weiterverarbeitung in die einzelnen Schichten auflöst.

Eine weitere Aufgabe der vorliegenden Erfindung ist das Bereitstellen einer Verbundplatte für die Orthopädietechnik bestehend aus Schichten oder Abschnitten geschäumter Kunststoffe unterschiedlicher Härten, Farben, Raumgewichte und Verformungseigenschaften, die ohne Verklebung unlösbar miteinander verbunden sind.

Noch eine weitere Aufgabe der vorliegenden Erfindung ist das Bereitstellen eines einfachen und wirtschaftlichen Verfahrens zur Herstellung von Verbundplatten aus geschäumten Kunststoffen unterschiedlicher Härte.

Die vorliegende Erfindung betrifft eine Verbundplatte umfassend mindestens zwei direkt aneinandergrenzende Schichten oder Abschnitte geschäumter Kunststoffe, die jeweils aus vernetztem und geschlossenzellig geschäumtem und Füllstoff enthaltendem Material bestehen, wenigstens unterschiedliche Härte und/oder Farbe und/oder Raumgewicht aufweisen und ohne Einsatz eines Klebmittels miteinander verbunden sind.

Schichtförmige Materialien weisen verschiedene Oberflächentypen auf, nämlich die durch Länge und Breite definierten Oberflächen und die durch Dicke und Breite oder durch Dicke und Länge definierten Oberflächen.

Unter direkt aneinandergrenzenden Schichten sind im Rahmen dieser Beschreibung zwei schichtförmige Materialien zu verstehen, die jeweils mit einer durch Breite und Länge definierten Oberfläche aneinandergrenzen.

Unter direkt aneinandergrenzenden Abschnitten sind im Rahmen dieser Beschreibung zwei schichtförmige Materialien zu verstehen, die jeweils mit einer durch Dicke und Breite und/oder mit einer durch Dicke und Länge definierten Oberfläche aneinandergrenzen.

Als thermoplastisches Ausgangsmaterial für die erfindungsgemäße Verbundplatte kommen alle thermoplastischen Kunststoffe in Frage, die zu geschlossenzellig geschäumtem Material verarbeitet werden können und die einer Vernetzung, beispielsweise durch Vernetzung ethylenisch ungesättigter Bindungen durch den Einsatz von Radikalbildnern, unterworfen werden können.

Beispiele dafür sind Polyethylen und Copolymere des Ethylens mit wenigstens einem Comonomer, welches der Gruppe der
- Vinylester gesättigter Carbonsäuren mit bis zu 4 C-Atomen in der Säuregruppe, insbesondere Vinylacetat
- ungesättigten Mono- oder Dicarbonsäuren,
- Ester ungesättigter Mono- oder Dicarbonsäuren mit bis zu 8 C-Atomen im Alkoholanteil
- α-Olefine mit 4 bis 10 C-Atomen
angehört.

Dabei sollte der Ethylengehalt des Copolymers 40 bis 95 Gew.-% und der Comonomer-Gehalt 5 bis 60 Gew.-% betragen. Der Schmelzindex des Copolymers sollte zwischen 0,1 und 50 liegen.

Bevorzugt werden Vinylester-Copolymere, besonders bevorzugt Vinylester-Ethylen-Copolymere und insbesondere Vinylacetat-Ethylen-Copolymere (nachstehend auch "EVA" genannt) eingesetzt.

Diese Polymeren können in an sich bekannter Weise in einem Mischer mit thermisch zersetzbaren Treibmitteln und Vernetzungsmitteln kombiniert und nach Herstellung der Rohplatten in einer Presse zu geschäumten und ernetzten Formkörpern verarbeitet werden. Dieses ist für Formkörper aus EVA beispielsweise in der DE-A-31 14 105 beschrieben.

Beispiele für Treibmittel sind Azoverbindungen, Hydrazin-Derivate, Semicarbazide, Tetrazole und Benzoxazine. Bevorzugt wird Azodicarbonamid.

Beispiele für Vernetzungsmittel sind radikalbildende Verbindungen, wie Hydroperoxide, Alkylperoxide, Perester, Diacylperoxide und Peroxiketale. Bevorzugt werden Dicumylperoxid oder Bis-(tert.-butylperoxyisopropyl)-benzol auch in Kombination mit vernetzungsfördernden Mitteln wie mehrfunktionelle Acrylate, trifunktionelle Cyanurate oder Isocyanurate.

Neben Treibmittel und Vernetzer weisen die einzelnen Schichten oder Abschnitte des erfindungsgemäßen Verbundes Füllstoffe auf. Dabei kann es sich um gleiche oder unterschiedliche Füllstoffe handeln. Beispiele für Füllstoffe sind natürliche oder synthetische, gefällte Calciumcarbonate (Kreide), Hart-, Weich- oder calzinierte Kaoline, Glimmer, synthetische Kieselsäuren, Aluminiumhydroxid, Ruß und Graphit. Besonders bevorzugt werden synthetische Kieselsäure und/oder Kreide als Füllstoffe eingesetzt.

Besonders bevorzugte Verbundplatten enthalten in einer Schicht oder in einem Abschnitt Kieselsäure als Füllstoff und in einer weiteren Schicht oder in einem weiteren Abschnitt Kreide als Füllstoff oder eine Kombination aus Kreide- und Kieselsäurefüllstoff.

Die Menge an Treibmittel, Vernetzer und Füllstoff für die einzelnen Schichten des Verbundmaterials ist im Einzelfall so zu wählen, daß ein Schaumstoff der gewünschten Härte und des gewünschten Raumgewichts entsteht.

Typische Mengen von Treibmittel bewegen sich im Bereich von 0,4 bis 1,0 Gew. %, vorzugsweise von 0,8 bis 2,5 Gew. %, bezogen auf die Gesamtmenge des Materials einer Schicht.

Typische Mengen von Vernetzer bewegen sich im Bereich von 0,2 bis 1,0 Gew. %, vorzugsweise von 0,4 bis 0,7 Gew. %, bezogen auf die Gesamtmenge des Materials einer Schicht.

Typische Mengen von Füllstoff bewegen sich im Bereich von 2 bis 30 Gew. %, vorzugsweise von 3 bis 20 Gew. %, bezogen auf die Gesamtmenge des Materials einer Schicht.

Erfindungsgemäß werden Materialien gleicher Grundzusammensetzung gemeinsam einem Aufschäumungs- und Vulkanisationsprozess unterworfen, wobei sowohl das zugefügte Vernetzungsmittel sowie das Treibmittel sich unter dem Einfluß der Temperatur zersetzen und den Vernetzungsvorgang sowie Treibvorgang einleiten. Die Mengen an Vernetzungs-, Treibmittel, Füllstoff(en) und gegebenenfalls von weiteren Zusatzstoffen in den einzelnen Schichten sind dabei so zu wählen, daß vernetzte Schichten unterschiedlicher Härte und/oder Farbe und/oder Raumgewicht entstehen.

Bevorzugte Verbundplatten weisen zwei oder mehrere Abschnitte auf, die über eine Dimension der Verbundplatte (also mit den durch Länge und Dicke und/oder durch Breite und Dicke definierten Oberflächen) miteinander verbunden sind, wobei diese Abschnitte sich durch Härte und/oder Farbe und/oder Raumgewicht unterscheiden.

Vorzugsweise sind diese abschnittsweise aufgebauten Verbundplatten über deren Längs- oder Quererstreckung betrachtet symmetrisch aufgebaut und können in der Dicke aus nur einer Schicht bestehen.

In einer weiteren bevorzugten Ausführungsform sind diese abschnittsweise aufgebauten Verbundplatten über deren Längs- oder Quererstreckung betrachtet unsymmetrisch aufgebaut. Derartige Verbundplatten können durch Abschneiden des ursprünglichen Aufbaus aus symmetrisch aufgebauten Verbundplatten erzeugt werden, bei der die symmetrische Gestaltung der unterschiedlichen Härten, Farben und/oder Raumgewichte gestört wird, so dass aus mindestens zwei Abschnitten bestehende Körper entstehen.

Weitere bevorzugte Verbundplatten weisen mindestens zwei direkt aneinandergrenzende Schichten geschäumter Kunststoffe auf.

Bevorzugte Verbundplatten dieses Typs weisen zwei oder mehrere Schichten auf, die jeweils über eine Dimension der Verbundplatte (also mit den durch Länge und Breite definierten Oberflächen) miteinander verbunden sind, wobei diese Schichten sich durch Härte und/oder Farbe und/oder Raumgewicht unterscheiden.

Vorzugsweise sind diese schichtweise aufgebauten Verbundplatten über deren Längs- und Quererstreckung sowie über deren Dicke betrachtet symmetrisch aufgebaut und bestehen aus mindestens zwei Schichten.

In einer weiteren bevorzugten Ausführungsform sind diese schichtweise aufgebauten Verbundplatten über deren Längs- und Quererstreckung betrachtet symmetrisch und über deren Dicke betrachtet unsymmetrisch aufgebaut. Derartige Verbundplatten können durch Abspalten mindestens einer Schicht des ursprünglichen Aufbaus aus symmetrisch aufgebauten Verbundplatten erzeugt werden, bei der die symmetrische Gestaltung der unterschiedlichen Härten, Farben und/oder Raumgewichte gestört wird, so dass aus mindestens zwei Schichten bestehende Körper entstehen.

Besonders bevorzugt werden dreischichtige Verbundplatten die so aufgebaut sind, daß ein über den Querschnitt (die Dicke) symmetrischer Aufbau von unterschiedlichen Materialien entsteht.

Durch diese symmetrische Anordnung wird das Auftreten eines so genannten Bimetalleffektes vermieden.

Die gewählte Zusammensetzung der Materialien gewährleistet, daß sowohl der Vernetzungsvorgang als auch die Treibmittelzersetzung, d. h. die Gasentwicklung so aufeinander abgestimmt erfolgen, daß im Endprodukt ein fester Verbund der unterschiedlichen Materialien entsteht. Der Vorteil dieser Vorgehensweise ist eine nicht lösbare Verbindung zwischen den Schichten unterschiedlicher Härte, Farbe, Raumgewicht und damit auch unterschiedlichen Verformungsverhaltens in der Weiterverarbeitung.

Die so hergestellten Verbundplatten können nach dem Herstellvorgang noch aufgespalten werden, um die härteren oder weicheren Schichten oder Teile davon gezielt freizulegen.

Die erfindungsgemäßen Verbundplatten können in einzelnen oder allen Schichten gegebenenfalls noch weitere an sich übliche Hilfsstoffe enthalten. Diese werden in Abhängigkeit des gewünschten Eigenschaftsprofils und der Verarbeitungsweise der Verbundplatte zugesetzt. Beispiele für solche Zusätze sind Farbstoffe, Pigmente und Verarbeitungshilfsmittel wie z. B. Metalloxide, wie Calciumoxid oder Magnesiumoxid, Zinksalze von Fettsäuren, Fettsäureester, Fettalkohole, Fettsäuren, Fettsäureamide, Fettsäurediamide, Wachssäuren, polare Polyäthylenwachse, unpolare Polyäthylenwachse, Paraffine, Diäthylenglykol, Polyäthylenglykol.

Die Erfindung betrifft weiterhin auch ein Verfahren zur Herstellung der oben beschriebenen Verbundplatte umfassend die Maßnahmen:
i) Mischen von thermoplastischem und nachvernetzbarem Kunststoff mit mindestens einem Treibmittel, mindestens einem Vernetzer, einem oder mehreren Füllstoffen und gegebenenfalls weiteren üblichen Zusatzstoffen zur Herstellung einer ersten Mischung,
ii) Mischen von thermoplastischem und nachvernetzbarem Kunststoff mit mindestens einem Treibmittel, mindestens einem Vernetzer, einem oder mehreren Füllstoffen und gegebenenfalls weiteren üblichen Zusatzstoffen zur Herstellung einer zweiten Mischung, die sich von der ersten Mischung unterscheidet,
iii) Herstellen einer ersten Schicht oder eines ersten Abschnitts aus der ersten Mischung in an sich bekannter Weise,
iv) Herstellen einer zweiten Schicht oder eines zweiten Abschnitts aus der zweiten Mischung in an sich bekannter Weise,
v) Einführen der ersten, der zweiten Schicht und gegebenenfalls weiterer Schichten oder Abschnitte in eine beheizbare Presse, und
vi) Erhitzen der beheizbaren Presse auf eine Temperatur und Einstellen eines Preßdruckes in der Weise, daß sich die Treibmittel der ersten und der zweiten Schicht oder Abschnitt zersetzen und sich in der ersten und der zweiten Schicht oder Abschnitt geschlossenzellige Schäume ausbilden und daß die Vernetzer der ersten und der zweiten Schicht oder Abschnitte eine Vernetzung des thermoplastischen Kunststoffes dieser Schichten oder Abschnitte sowie eine Verbindung beider Schichten oder Abschnitte bewirken.

Erfindungsgemäß werden die Materialien für die einzelnen Schichten zuvor in an sich bekannter Weise in Mischaggregaten z. B. in einem Innenmischer oder in einem Mischextruder gemischt und werden jeweils als Rohlingsplatten dem Vulkanisationsprozess zugeführt. Die Herstellung der Rohlingsplatten kann in an sich üblicher Weise erfolgen, beispielsweise durch einen Kalanderprozeß.

Die Vulkanisation findet zur Herstellung von geschlossenzelligen Platten in Pressen statt. Für das nachstehend beschriebene EVA-System beträgt die Temperatur typischerweise zwischen 150 und 180°C, bevorzugt etwa 170°C. Der Preßdruck liegt typischerweise bei 150 bis 250 Atmosphären, bevorzugt bei etwa 200 Atmosphären.

Die Herstellung der erfindungsgemäßen Verbundplatten erfolgt durch einfaches Verpressen der einzelnen Schichten in der Hitze, also ohne den Einsatz von strahlungsinduzierten Vernetzungen.

Die Rohmaterialien für die einzelnen Schichten werden nach Länge, Breite und Dicke dem beabsichtigen Verwendungszweck nach definiert. Diese Rohmaterialien werden je nach erforderlicher Dicke des Endproduktes und Kombinationswunsch so zusammengestellt, daß ein Endprodukt aus unterschiedlichen Materialien entsteht.

Die einzelnen Schichten können in der Presse in beliebiger Weise kombiniert werden. Neben dem Aufeinanderlegen einzelner Schichten zum Aufbau von Verbundplatten mit direkt aneinandergrenzenden Schichten können einzelne Schichten auch direkt aneinandergrenzend nebeneinander in die Presse eingelegt werden, so dass Abschnitte geschäumter Kunststoffe entstehen. Beide Typen von Schichtfolgen können auch miteinander kombiniert werden.

In einer bevorzugten Ausführungsform des erfindungsgemäßen Verfahrens werden in die beheizbare Presse in aufeinander folgender Weise eine erste Schicht aus der ersten Mischung, eine zweite Schicht aus der zweiten Mischung und eine dritte Schicht aus der ersten Mischung eingeführt, so dass die einzelnen Schichten übereinander zu liegen kommen.

In einer weiteren bevorzugten Ausführungsform des erfindungsgemäßen Verfahrens werden in die beheizbare Presse in aufeinander folgender Weise eine erste Schicht aus der ersten Mischung, eine zweite Schicht aus der zweiten Mischung und eine dritte Schicht aus der ersten Mischung eingeführt, so dass die einzelnen Schichten nebeneinander zu liegen kommen, direkt aneinandergrenzen und eine Verbundplatte mit mehreren Abschnitten entstehen kann.

Die erfindungsgemäßen Verbundplatten lassen sich als Rohmaterial in der Orthopädietechnik einsetzen und vorteilhafterweisen zu Einlegesohlen oder Laufsohlen für Schuhe verarbeiten. Die Erfindung betrifft auch Verwendung zu diesen Zwecken.

Das nachstehende Beispiel erläutert die Erfindung ohne diese zu begrenzen.

### Beispiele

Im Folgenden wird die Vorgehensweise zur Herstellung eines Kombinationsproduktes aus zwei EVA-Materialien unterschiedlicher Härte und Farbe dargestellt.

In einem ersten Schritt wurden zwei unterschiedliche EVA-Mischungen im Innenmischer bei einer Mischtemperatur von ca. 110° C und einer Verweilzeit von ca. 10 Minuten gemischt.

Die Komponente A besaß folgende Zusammensetzung:

| | |
|---|---|
| Ethylen-Vinylacetat-Copolymer mit einem Vinylacetatgehalt von 15 % | 73 % |
| Kieselsäurefüllstoff | 12 % |
| Pigmente, Verarbeitungshilfen | 13 % |
| Treibmittel, z. B. Azodicarbonamid | 2,5 % |
| Vernetzungsmittel, z. B. Dicumylperoxid | 0,5 % |

Diese Mischung hatte im vernetzten und getriebenen Zustand ein Raumgewicht von ca. 20 kg/m³ und eine Härte von ca. 40 Shore A.

Eine zweite Komponente B, bestand aus:

| | |
|---|---|
| Ethylen-Vinylacetat-Copolymer mit einem Vinylacetatgehalt von 14 % | 72 % |
| Kreide-Füllstoff | 14 % |
| Pigmente, Verarbeitungshilfen | 6,4 % |
| Treibmittel, z. B. Azodicarbonamid | 7 % |
| Vernetzungsmittel, z. B. Dicumylperoxid | 0,6 % |

und wurde in gleicher Weise wie Komponente A gemischt. Diese Mischung B hatte im Endzustand ein Raumgewicht von 8 kg/m³ und eine Härte von ca. 18 Shore A.

Aus beiden Mischungen wurden in einem Kalanderprozess jeweils 4 mm dicke Platten in einer Abmessung, die sich nach der Größe der Vulkanisationsform richtete, hergestellt und an der Presse miteinander so kombiniert, daß die Mischung A in der Mitte jeweils zwischen einer Lage der Mischung B zu liegen kam.

Diese Kombination wurde in die Preßform gegeben und bei einer Temperatur zwischen 150 und 180° C, bevorzugt 170° C, und einer Zeit, abhängig von der Dicke des herzustellenden Produkts, z. B. bei 24 mm Enddicke von 28 Minuten geheizt und nach dem Ablauf der Heizzeit durch Öffnen der Presse expandiert.

Somit entstand ein Kombinationsprodukt aus Materialien unterschiedlicher Härte, unterschiedlichen Raumgewichts, unterschiedlicher Farbe und einer unterschiedlichen Verformungseigenschaft, dessen Schichten nicht mehr lösbar waren.

Analog zu diesem Verfahren konnten die Platten der Mischungen A und B in der Presse so aneinander gelegt werden, dass sich zwei Stoßkanten berührten. Durch Verpressen und Erhitzen konnte somit ein unlöslicher Verbund zwischen den beiden Abschnitten hergestellt werden.

## Patentansprüche

1. Verbundplatte umfassend mindestens zwei direkt aneinandergrenzende Schichten oder Abschnitte geschäumter Kunststoffe, die jeweils aus vernetztem und geschlossenzellig geschäumtem und Füllstoff enthaltendem Material bestehen, wenigstens unterschiedliche Härte und/oder Farbe und/oder Raumgewicht aufweisen und ohne Einsatz eines Klebmittels miteinander verbunden sind.

2. Verbundplatte nach Anspruch 1, **dadurch gekennzeichnet, dass** das vernetzte und geschlossenzellig geschäumte Material ein Ethylen-Vinylacetat-Copolymeres ist.

3. Verbundplatte nach Anspruch 2, **dadurch gekennzeichnet, dass** das Ethylen-Vinylacetat-Copolymere durch Einsatz von Azodicarbonamid geschäumt worden ist.

4. Verbundplatte nach Anspruch 2, **dadurch gekennzeichnet, dass** das Ethylen-Vinylacetat-Copolymere durch Einsatz von organischen Persäuren, Peroxiden, bevorzugt durch Dicumylperoxid, vernetzt worden ist.

5. Verbundplatte nach Anspruch 1, **dadurch gekennzeichnet, dass** eine Schicht oder ein Abschnitt Kieselsäurefüllstoff enthält und dass eine weitere Schicht oder ein weiterer Abschnitt Kreidefüllstoff enthält oder eine Kombination aus Kreide- und Kieselsäurefüllstoff.

6. Verbundplatte nach Anspruch 1, **dadurch gekennzeichnet, dass** diese zwei- oder mehrschichtig ist und so aufgebaut ist, dass aneinandergrenzende Schichten geschäumter Kunststoffe jeweils über durch Länge und Breite definierte Oberflächen miteinander verbunden sind, wobei diese Schichten sich durch Härte und/oder Farbe und/oder Raumgewicht unterscheiden.

7. Verbundplatte nach Anspruch 6, **dadurch gekennzeichnet, dass** diese über deren Längs- und Quererstreckung sowie über deren Dicke betrachtet symmetrisch aufgebaut ist.

8. Verbundplatte nach Anspruch 7, **dadurch gekennzeichnet, dass** diese drei- oder mehrschichtig ist und so aufgebaut ist, dass ein über den Querschnitt symmetrischer Aufbau von unterschiedlichen Materialien entsteht.

9. Verbundplatte nach Anspruch 6, **dadurch gekennzeichnet, dass** diese über deren Längs- und Quererstreckung betrachtet symmetrisch aufgebaut ist und über deren Dicke betrachtet unsymmetrisch aufgebaut ist

10. Verbundplatte nach Anspruch 1, **dadurch gekennzeichnet, dass** diese zwei oder mehrere Abschnitte aufweist, die über mit den durch Länge und Dicke und/oder durch Breite und Dicke definierten Oberflächen der Abschnitte miteinander verbunden sind, wobei diese Abschnitte sich durch Härte, und/oder Farbe, und/oder Raumgewicht unterscheiden, und die Verbundplatte über deren Längs- oder Querstreckung betrachtet symmetrisch aufgebaut ist.

11. Verbundplatte nach Anspruch 1, **dadurch gekennzeichnet, dass** diese zwei oder mehrere Abschnitte aufweist, die über mit den durch Länge und Dicke und/oder durch Breite und Dicke definierten Oberflächen der Abschnitte miteinander verbunden sind, wobei diese Abschnitte sich durch Härte, und/oder Farbe, und/oder Raumgewicht unterscheiden, und die Verbundplatte über deren Längs- oder Querstreckung betrachtet unsymmetrisch aufgebaut ist.

12. Verfahren zur Herstellung der Verbundplatte nach Anspruch 1 umfassend die Maßnahmen:
i) Mischen von thermoplastischem und vernetzbarem Kunststoff mit mindestens einem Treibmittel, mindestens einem Vernetzer, mindestens einem Füllstoff und gegebenenfalls weiteren an sich üblichen Zusatzstoffen zur Herstellung einer ersten Mischung,
ii) Mischen von thermoplastischem und vernetzbarem Kunststoff mit mindestens einem Treibmittel, mindestens einem Vernetzer, mindestens einem Füllstoff und gegebenenfalls weiteren an sich üblichen Zusatzstoffen zur Herstellung einer zweiten Mischung, die sich von der ersten Mischung unterscheidet,
iii) Herstellen einer ersten Schicht oder eines ersten Abschnitts aus der ersten Mischung in an sich bekannter Weise,
iv) Herstellen einer zweiten Schicht oder eines zweiten Abschnittes aus der zweiten Mischung in an sich bekannter Weise,
v) Einführen der ersten, der zweiten Schicht und gegebenenfalls weiterer Schichten oder Abschnitte in eine beheizbare Presse, und
vi) Erhitzen der beheizbaren Presse auf eine Temperatur und Einstellen eines Preßdruckes in der Weise, daß sich die Treibmittel der ersten und der zweiten Schicht oder Abschnitt zersetzen und sich in der ersten und der zweiten Schicht oder Abschnitt geschlossenzellige Schäume ausbilden und daß die Vernetzer der ersten und der zweiten Schicht oder Abschnitte eine Vernetzung des thermoplastischen Kunststoffes dieser Schichten oder Abschnitte sowie eine Verbindung beider Schichten oder Abschnitte bewirken.

13. Verfahren nach Anspruch 12, **dadurch gekennzeichnet, dass** als thermoplastischer und vernetzbarer Kunststoff in der ersten Mischung und in der zweiten Mischung Ethylen-Vinylacetat-Copolymer eingesetzt wird.

14. Verfahren nach Anspruch 12, **dadurch gekennzeichnet, dass** als Treibmittel Azodicarbonamid eingesetzt wird.

15. Verfahren nach Anspruch 12, **dadurch gekennzeichnet, dass** als Vernetzer organische Peroxide, bevorzugt Dicumylperoxid, eingesetzt werden.

16. Verfahren nach Anspruch 12, **dadurch gekennzeichnet, dass** als Füllstoff in einer Schicht oder einem Abschnitt Kieselsäure eingesetzt wird und als Füllstoff in einer weiteren Schicht oder Abschnitt Kreide eingesetzt wird oder eine Kombination aus Kreide- und Kieselsäurefüllstoff.

17. Verfahren nach Anspruch 12, **dadurch gekennzeichnet, dass** in Schritt vi) eine Temperatur der Presse von 150 bis 180°C und ein Preßdruck von 150 bis 250 Atmosphären gewählt werden.

18. Verfahren nach Anspruch 12, **dadurch gekennzeichnet, dass** in die beheizbare Presse in aufeinander folgender Weise eine erste Schicht aus der ersten Mischung, eine zweite Schicht aus der zweiten Mischung und eine dritte Schicht aus der ersten Mischung eingeführt werden.

19. Verfahren nach Anspruch 12, **dadurch gekennzeichnet, dass** in die beheizbare Presse in aufeinander folgender Weise eine erste Schicht aus der ersten Mischung, eine zweite Schicht aus der zweiten Mischung und eine dritte Schicht aus der ersten Mischung eingeführt werden, so dass die einzelnen Schichten nebeneinander zu liegen kommen und direkt aneinandergrenzen, so dass eine Verbundplatte mit mehreren Abschnitten entstehen kann.

20. Verwendung der Verbundplatte nach Anspruch 1 zur Herstellung von Einlegesohlen oder Laufsohlen für Schuhe.
